# EUROPEAN PATENT APPLICATION

(11) **EP 4 549 901 A1**
(43) Date of publication of application: **07.05.2025**
(21) Application number: 24208866.4
(22) Date of filing: 25.10.2024
(51) Int. Cl.: G01L 9/00, G01L 19/04

(54) **PRESSURE SENSOR**

(30) Priority: 30.10.2023 JP 2023185806
(71) Applicant: Yokogawa Electric Corporation, Tokyo 180-8750 (JP)
(72) Inventor: HAMAMATSU, Nobuyuki, Musashino-shi, Tokyo 180-8750 (JP); YOKOUCHI, Hiroshi, Musashino-shi, Tokyo 180-8750 (JP); KANEKO, Ryosuke, Musashino-shi, Tokyo 180-8750 (JP); YOSHIDA, Takashi, Musashino-shi, Tokyo 180-8750 (JP)
(74) Representative: Winter, Brandl - Partnerschaft mbB

(57) **Abstract**

A pressure sensor includes: a pressure receiver having a diaphragm portion that is deformed by receiving pressure on a pressure receiving surface thereof, and a rim portion formed around and integrally with the diaphragm portion and formed to be thicker than the diaphragm portion; and a semiconductor substrate that is connected to a reverse surface of the pressure receiving surface and detects strain in the diaphragm portion by means of a resonating strain gauge. The pressure receiver is formed of ceramic. The semiconductor substrate has: a base portion provided to face the reverse surface; and a connected portion that protrudes from the base portion toward the reverse surface and has a connected surface connected to the reverse surface. The connected portion has an area smaller than an area of the base portion in a case where the pressure sensor is viewed from a direction perpendicular to the reverse surface.

## Description

### BACKGROUND OF THE INVENTION

### 1. Field of the Invention

The present invention relates to a pressure sensor to measure pressure applied to a pressure receiving surface of a diaphragm.

### 2. Description of the Related Art

A pressure sensor to measure pressure of a measured target that is mainly fluid has been known. The pressure sensor includes a diaphragm. The diaphragm has a pressure receiving surface where pressure is applied from the measured target. The pressure sensor measures a pressure on the basis of an amount of deformation of the diaphragm, the deformation resulting from the pressure applied to the pressure receiving surface. Examples of such a pressure sensor include a pressure sensor having: a diaphragm formed of metal; and a piezoresistive strain gauge attached to the diaphragm, as described in Japanese Laid-open Patent Publication No. 11-094666.

If a measured target includes foreign matter, a diaphragm formed of metal undergoes plastic deformation by collision with the foreign matter. In a case where a measured target is a corrosive fluid, such as an acidic or alkaline fluid, a diaphragm formed of metal may be corroded. In a case where a measured target is hydrogen, the measured target may permeate through a diaphragm formed of metal, or the diaphragm may become brittle due to hydrogen embrittlement.

An object of the present invention is to obtain a pressure sensor with improved resolution while increasing strength, abrasion resistance, and corrosion resistance of its diaphragm.

### SUMMARY OF THE INVENTION

An object of the present invention is to obtain a pressure sensor with improved resolution while increasing strength, abrasion resistance, and corrosion resistance of its diaphragm.

A pressure sensor, comprising: a pressure receiver having: a diaphragm portion that is deformed by receiving pressure on a pressure receiving surface thereof; and a rim portion that is formed around and integrally with the diaphragm portion and formed to be thicker than the diaphragm portion; and a semiconductor substrate that is connected to a reverse surface of the pressure receiving surface and detects strain in the diaphragm portion, wherein the pressure receiver is formed of ceramic, the semiconductor substrate has: a base portion provided to face the reverse surface; and a connected portion that protrudes from the base portion toward the reverse surface and has a connected surface connected to the reverse surface, at least one resonating strain gauge has been provided on the semiconductor substrate, and the connected portion has an area smaller than an area of the base portion in a case where the pressure sensor is viewed from a direction perpendicular to the reverse surface.

### BRIEF DESCRIPTION OF THE DRAWINGS

FIG. 1 is a sectional view of a pressure sensor according to a first embodiment;
FIG. 2 is a diagram of the pressure sensor illustrated in FIG. 1 and viewed from a semiconductor substrate;
FIG. 3 is a diagram of a pressure sensor according to a first modified example of the first embodiment, the pressure sensor being viewed from a semiconductor substrate;
FIG. 4 is a diagram of a pressure sensor according to a second modified example of the first embodiment, the pressure sensor being viewed from a semiconductor substrate;
FIG. 5 is a sectional view of a pressure sensor according to a third modified example of the first embodiment;
FIG. 6 is a diagram of the pressure sensor illustrated in FIG. 5 and viewed from a semiconductor substrate;
FIG. 7 is a sectional view of a pressure sensor according to a fourth modified example of the first embodiment;
FIG. 8 is a sectional view of a pressure sensor according to a fifth modified example of the first embodiment;
FIG. 9 is a sectional view of a pressure sensor according to a sixth modified example of the first embodiment; and
FIG. 10 is a sectional view of a pressure sensor according to a seventh modified example of the first embodiment.

### DETAILED DESCRIPTION OF THE PREFERRED EMBODIMENTS

A pressure sensor according to an embodiment of the present invention will hereinafter be described in detail by reference to the drawings. The present invention is not to be limited by the embodiment described hereinafter.

### First Embodiment

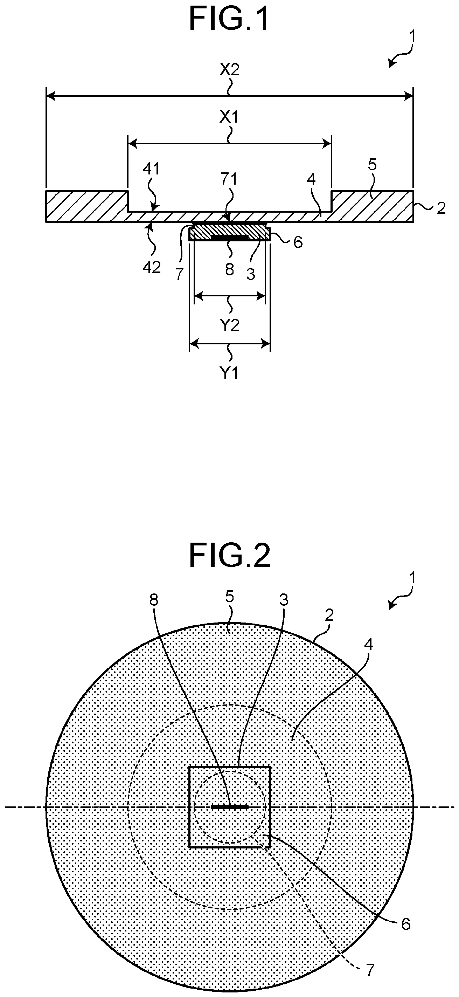

FIG. 1 is a sectional view of a pressure sensor according to a first embodiment. FIG. 2 is a diagram of the pressure sensor illustrated in FIG. 1 and viewed from a semiconductor substrate. A pressure sensor 1 includes a pressure receiver 2 and a semiconductor substrate 3. The pressure sensor 1 measures pressure of a measured target that is mainly fluid.

The pressure receiver 2 is formed of ceramic. The pressure receiver 2 has a diaphragm portion 4 and a rim portion 5.

The diaphragm portion 4 is a plate shaped portion formed to be thinner than the rim portion 5 and functions as a diaphragm that is deformed by pressure received from a measured target. One of surfaces of the diaphragm portion 4 is a pressure receiving surface 41 that comes into contact with the measured target. A reverse surface 42 of the diaphragm portion 4 is a surface where the semiconductor substrate 3 is connected, the reverse surface 42 facing in an opposite direction opposite to a direction that the pressure receiving surface 41 faces. FIG. 2 is a diagram of the pressure sensor 1 viewed from the reverse surface 42. In the following description, a state where the pressure sensor 1 is viewed from a direction perpendicular to the reverse surface 42 will simply be referred to as a planar view.

In a planar view, the diaphragm portion 4 has a circular shape. The diaphragm portion 4 is flat in a state where both the pressure receiving surface 41 and the reverse surface 42 are not receiving pressure. The rim portion 5 has a ring shape surrounding the diaphragm portion 4. As illustrated in FIG. 1, the rim portion 5 is formed to be thicker than the diaphragm portion 4. The rim portion 5 is smoothly connected with the reverse surface 42 of the diaphragm portion 4 without any level difference. An overall shape of the pressure receiver 2 is thus a shape having a recess formed in a portion where the diaphragm portion 4 has been formed, the recess being on the pressure receiving surface 41.

The semiconductor substrate 3 has a base portion 6, a connected portion 7, and a resonator 8. The semiconductor substrate 3 is formed of silicon. The base portion 6 is provided to face the reverse surface 42 of the diaphragm portion 4. In a planar view, the base portion 6 has a square shape.

The connected portion 7 protrudes from the base portion 6 toward the reverse surface 42 of the diaphragm portion 4. In FIG. 2, the connected portion 7 is illustrated with a broken line. The connected portion 7 has a connected surface 71 connected to the reverse surface 42 of the diaphragm portion 4. The connected portion 7 and the diaphragm portion 4 are physically or mechanically connected to each other such that vibrations and deformations can be transmitted. In a planar view, the connected surface 71 (the connected portion 7) has a circular shape. In a planar view, the connected portion 7 has an area smaller than an area of the base portion 6.

Furthermore, in a planar view, the connected surface 71 has an area smaller than an area of the diaphragm portion 4 and the entire connected surface 71 is connected to the reverse surface 42 of the diaphragm portion 4. In summary, in this first embodiment, relations between an outer diameter X1 of the diaphragm portion 4, an outer diameter X2 of the rim portion 5, a side length Y1 of the base portion 6, and an outer diameter Y2 of the connected surface 71 are expressed as "X2 > X1 > Y1 > Y2".

The resonator 8 is formed in the base portion 6. An electrode pad not illustrated in the drawings has been provided in the base portion 6. The resonator 8 is driven by application of voltage to the resonator 8 through the electrode pad.

The diaphragm portion 4 in the pressure sensor 1 is deformed by pressure received from a measured target and the semiconductor substrate 3 is also deformed in association with this deformation. This deformation of the semiconductor substrate 3 generates strain in the resonator 8 and changes its resonance frequency. A change in the resonance frequency of the resonator 8 is detected on the basis of an electric signal obtained through the electrode pad. Knowing a relation between the pressure applied to the diaphragm portion 4 and the change in the resonance frequency of the resonator 8 in the pressure sensor 1 beforehand enables detection of a pressure value generated in the measured target.

Because the diaphragm portion 4 and the rim portion 5 that come into contact with a measured target are formed of ceramic in the pressure sensor 1 described above, the diaphragm portion 4 and the rim portion 5 do not undergo plastic deformation even if any foreign matter in the measured target collides with the diaphragm portion 4 and the rim portion 5, in contrast to a diaphragm formed of metal. Furthermore, because ceramic has corrosion resistance, measurement of a pressure value for a corrosive measured target, such as an acidic or alkaline measured target, is even possible. In addition, because ceramic is lower in hydrogen permeability than metal and less prone to hydrogen embrittlement, measurement of a pressure value is possible even if hydrogen is a measured target.

Deformation of the semiconductor substrate 3 in the pressure sensor 1 is preferably caused only by a change in pressure of a measured target. However, because the pressure receiver 2 and the semiconductor substrate 3 connected to each other are made of materials different from each other, the semiconductor substrate 3 is deformed due to a difference between their thermal expansion coefficients upon a temperature change. That is, upon a temperature change, the resonance frequency of the resonator 8 is changed by a factor other than the change in pressure of the measured target and this factor is an error factor in measurement of pressure values by the pressure sensor 1. To reduce such the error factor resulting from a temperature change, the difference between the thermal expansion coefficient of the pressure receiver 2 and the thermal expansion coefficient of the semiconductor substrate 3 needs to be decreased.

For example, in a conventional pressure sensor, a piezoresistive strain gauge is connected to a metallic diaphragm. Because the difference between the thermal expansion coefficient of the metallic diaphragm and the thermal expansion coefficient of the strain gauge is large in such a pressure sensor, the metallic diaphragm and the piezoresistive strain gauge are connected to each other via low-melting glass having a thermal expansion coefficient of a value that is between those of the metallic diaphragm and the piezoresistive strain gauge. This decreases the difference between the thermal expansion coefficients of the metallic diaphragm and the piezoresistive strain gauge from that in a case where the metallic diaphragm and the piezoresistive strain gauge are directly connected to each other, and the error factor resulting from a temperature difference are thus able to be reduced.

However, although the difference between the thermal expansion coefficients of the diaphragm and the strain gauge is able to be reduced, because the low-melting glass is viscoelastic, characteristics of the low-melting glass are drifted by the creep phenomenon. Drifting of the characteristics of the low-melting glass is an error factor in measurement of pressure values by a pressure sensor.

In this first embodiment, the diaphragm portion 4 and the rim portion 5 of the pressure receiver 2 are formed of ceramic. The base portion 6 and the connected portion 7 of the semiconductor substrate 3 are formed of silicon. Silicon has a thermal expansion coefficient αs of 2.6 ppm/K, and if, for example, silicon nitride having a thermal expansion coefficient αn of 3.4 ppm/K is used as the ceramic, the thermal expansion coefficient difference Δα = αn - αs becomes 0.8 ppm/K and the difference between the thermal expansion coefficients is thus able to be decreased. Therefore, even if the diaphragm portion 4 and the semiconductor substrate 3 are connected to each other, the error factor resulting from a temperature change are able to be reduced. The difference between the thermal expansion coefficient of the base portion 6 and the connected portion 7 and the thermal expansion coefficient of the diaphragm portion 4 and the rim portion 5 is preferably equal to or less than 2 ppm/°C in a range from 0°C to 200°C. Accordingly, if the difference between the thermal expansion coefficients is small in a wide temperature range, the temperature range where the pressure sensor 1 is usable is also wide. Using silicon nitride as the ceramic enables this condition to be met.

The semiconductor substrate 3 is made of silicon, the thermal expansion coefficient of the semiconductor substrate 3 is different from the thermal expansion coefficient of the ceramic material of the diaphragm portion 4, and the connected portion is thus deformed by a bimetallic effect. In a case where the thermal expansion coefficient of the ceramic material is larger than that of silicon, the diaphragm portion 4 made of the ceramic material expands in response to a temperature increase and tensile strain is generated in the semiconductor substrate 3 made of silicon, but at the same time, the surface of the diaphragm portion 4 becomes protruded, a surface of the semiconductor substrate 3 becomes recessed, the surface of the semiconductor substrate 3 is thus relatively compressed, and compressive strain resulting from the thermal expansion coefficient difference is thus generated in the resonator 8 mounted on the surface. Optimizing the thickness of the semiconductor substrate 3, the thickness of the diaphragm portion 4, and the area of the connected portion 7, for example, then enables designing to cancel out the strain caused by the thermal expansion coefficient difference, and temperature errors are thus able to be made substantially zero. In a case where the thermal expansion coefficient of the ceramic material is smaller than that of silicon also, designing to cancel out the strain caused by the thermal expansion coefficient difference is similarly enabled although the relation between the expansion and the compression is reversed.

A resonating strain gauge to detect a change in eigenfrequency of the resonator 8 is provided on the semiconductor substrate 3. The resonating strain gauge has a gauge factor (Gf) of approximately 1000, the gauge factor indicating resolution, the semiconductor substrate 3 thus has very high resolution, and the pressure sensor 1 thus has high resolution. At least one resonating strain gauge is provided on the semiconductor substrate 3.

The diaphragm portion 4 of the pressure sensor 1 may be increased in thickness and decreased in outer diameter to increase its pressure resistance. In a case where such an increase in the pressure resistance is made, the amount of deformation of the diaphragm portion 4 upon a change in pressure of a measured target is reduced, but the semiconductor substrate 3 having the higher resolution enables detection of a pressure value even if the amount of deformation is small. That is, the pressure sensor 1 achieves both higher pressure resistance and higher resolution.

In the semiconductor substrate 3, the connected portion 7 smaller in area than the base portion 6 in a planar view protrudes from the base portion 6 toward the reverse surface 42 of the diaphragm portion 4, and the semiconductor substrate 3 is connected to the diaphragm portion 4 at the connected surface 71 of the connected portion 7.

The semiconductor substrate 3 is manufactured through a dicing process of cutting a semiconductor wafer with a blade, the semiconductor wafer having a plurality of the semiconductor substrates 3 line up and integrally formed. Chipping and burrs may be formed at outer edges of the semiconductor substrate 3, the outer edges coming into contact with the blade. The chipping and burrs formed at the outer edges of the surface of the semiconductor substrate 3 may cause defects in connection to the reverse surface 42, the surface being a surface to be connected to the reverse surface 42 of the diaphragm portion 4.

However, as for the pressure sensor 1 according to this first embodiment, the periphery of a portion that becomes the connected portion 7 is able to be removed from the semiconductor wafer beforehand by etching in a process prior to the dicing process. This removal by etching enables highly precise processing with almost no formation of chipping and burrs. If the periphery of the portion that becomes the connected portion 7 is removed before the dicing process, the blade does not come into contact with the outer edges of the connected surface 71 in the dicing process and chipping and burrs are thus not formed at the outer edges of the connected surface 71.

Therefore, forming the connected portion 7 smaller in area than the base portion 6 in a planar view enables prevention of connection defects caused by any chipping and burrs formed at the outer edges of the connected surface 71.

The connected portions 7 formed highly precisely by the etching have less product inconsistencies. Product inconsistencies for the resolution of the pressure sensor 1 are thereby able to be reduced.

In a case where the pressure sensor 1 is to be increased in pressure resistance, the diaphragm portion 4 may be designed to have a smaller outer diameter. However, the semiconductor substrate 3 needs to have an area to mount elements to implement intended functions, such as an electrode pad and a sensor element to take out an electric signal. A portion where these elements are to be mounted does not need to be connected to the diaphragm portion 4 and is actually preferably not connected to the diaphragm portion 4 for preventing degradation in characteristics due to deformation of the electrode pad. In this first embodiment, forming the connected portion 7 such that the connected portion 7 has the area needed for connection to the reverse surface 42 of the diaphragm portion 4 and making the area of the base portion 6 larger than that of the connected portion 7 in a planar view enable provision of the portion to install the elements and provision of the pressure sensor 1 that enables pressure values to be measured more precisely.

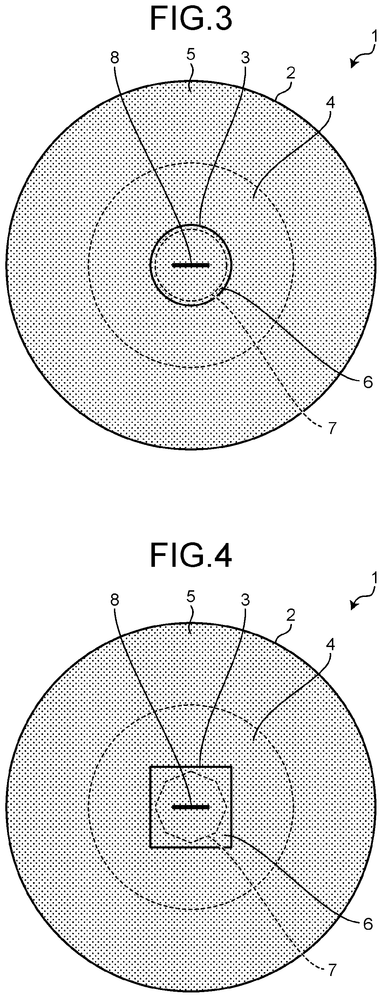

FIG. 3 is a diagram of a pressure sensor according to a first modified example of the first embodiment, the pressure sensor being viewed from a semiconductor substrate. As illustrated in FIG. 3, a base portion 6 may have a circular shape in a planar view. Even if the shape of the base portion 6 is circular, making the area of the base portion 6 larger than the area of a connected portion 7 enables prevention of connection defects caused by chipping and burrs and provision of a pressure sensor 1 that enables precise measurement of pressure values, similarly to the example illustrated in FIG. 1 and FIG. 2.

FIG. 4 is a diagram of a pressure sensor according to a second modified example of the first embodiment, the pressure sensor being viewed from a semiconductor substrate. As illustrated in FIG. 4, a connected portion 7 may have a polygonal shape in a planar view. Even if the shape of the connected portion 7 is polygonal, making the area of the connected portion 7 smaller than the area of a base portion 6 enables prevention of connection defects caused by chipping and burrs and provision of a pressure sensor 1 that enables precise measurement of pressure values, similarly to the example illustrated in FIG. 1 and FIG. 2.

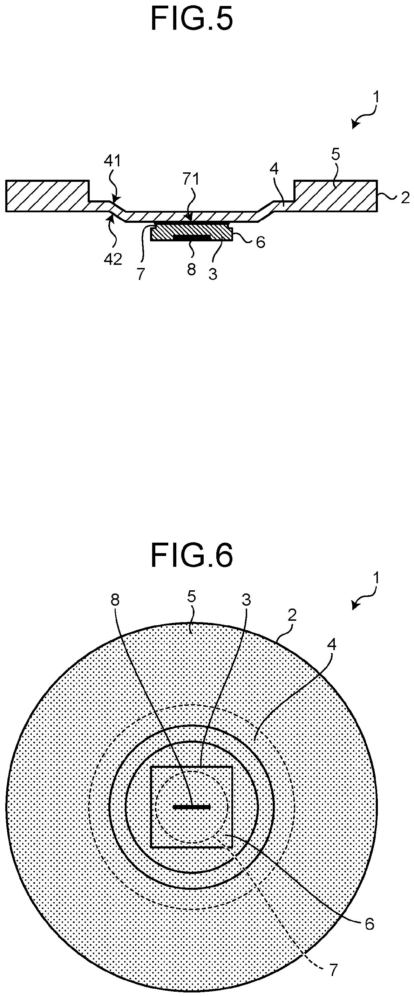

FIG. 5 is a sectional view of a pressure sensor according to a third modified example of the first embodiment. FIG. 6 is a diagram of the pressure sensor illustrated in FIG. 5 and viewed from a semiconductor substrate. As illustrated in FIG. 5 and FIG. 6, a pressure receiving surface 41 and a reverse surface 42 of a diaphragm portion 4 of a pressure sensor 1 according to the third modified example are not flat surfaces but have a level difference provided so that the diaphragm portion 4 protrudes in a direction of the reverse surface 42. The pressure receiving surface 41 and the reverse surface 42 of the diaphragm portion 4 are thus not necessarily flat surfaces.

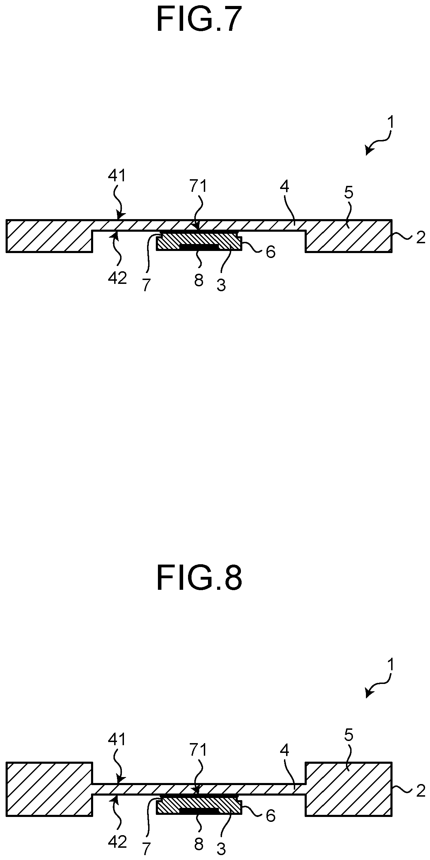

FIG. 7 is a sectional view of a pressure sensor according to a fourth modified example of the first embodiment. The sectional view illustrated in FIG. 7 corresponds to a cross section cut along a dash-dotted line illustrated in FIG. 2. As illustrated in FIG. 7, a rim portion 5 may be smoothly connected to a pressure receiving surface 41 of a diaphragm portion 4 without any level difference. An overall shape of a pressure receiver 2 of a pressure sensor 1 according to the fourth modified example is a shape having a recess formed at a portion where the diaphragm portion 4 has been formed, the recess being on one side of the pressure receiver 2, the one side being where a reverse surface 42 is.

FIG. 8 is a sectional view of a pressure sensor according to a fifth modified example of the first embodiment. The sectional view illustrated in FIG. 8 corresponds to a cross section cut along a dash-dotted line illustrated in FIG. 2. As illustrated in FIG. 8, a rim portion 5 is connected to a pressure receiving surface 41 and a reverse surface 42 of a diaphragm portion 4 with level differences respectively provided on both sides. An overall shape of a pressure receiver 2 of a pressure sensor 1 according to the fifth modified example is a shape having recesses formed at a portion where the diaphragm portion 4 has been formed, the recesses being respectively on both sides of the pressure receiver 2, these both sides being where the pressure receiving surface 41 and the reverse surface 42 are.

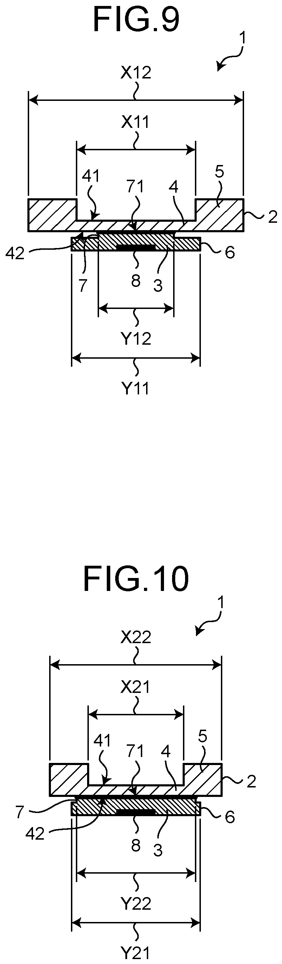

FIG. 9 is a sectional view of a pressure sensor according to a sixth modified example of the first embodiment. The sectional view illustrated in FIG. 9 corresponds to a cross section cut along a dash-dotted line illustrated in FIG. 2. As illustrated in FIG. 9, relations between an outer diameter X11 of a diaphragm portion 4, an outer diameter X12 of a rim portion 5, a side length Y11 of a base portion 6, and an outer diameter Y12 of a connected portion 7 are expressed as "X12 > Y11 > X11 > Y12". The side length Y11 of the base portion 6 is able to be made larger than the outer diameter X11 of the diaphragm portion 4, as illustrated in FIG. 9, if no recess has been formed on one side of the diaphragm portion 4, the one side being where a reverse surface 42 is. In a case where the base portion 6 is circular, Y11 is the outer diameter of the base portion 6, and in a case where the base portion 6 has a shape of a polygon of five or more sides, Y11 is a diameter of an inscribed circle of the base portion 6.

FIG. 10 is a sectional view of a pressure sensor according to a seventh modified example of the first embodiment. The sectional view illustrated in FIG. 10 corresponds to a cross section cut along a dash-dotted line illustrated in FIG. 2. As illustrated in FIG. 10, relations between an outer diameter X21 of a diaphragm portion 4, an outer diameter X22 of a rim portion 5, a side length Y21 of a base portion 6, and an outer diameter Y22 of a connected portion 7 are expressed as "X22 > Y21 > Y22 > X21". The outer diameter Y22 of the connected portion 7 is able to be made larger than the outer diameter X21 of the diaphragm portion 4, as illustrated in FIG. 10, if no recess has been formed on one side of the diaphragm portion 4, the one side being where a reverse surface 42 is. In the seventh modified example, an outer peripheral portion that is part of a connected surface 71 is in contact with the rim portion 5. In a case where the base portion 6 is circular, Y21 is the outer diameter of the base portion 6, and in a case where the base portion 6 has a shape of a polygon of five or more sides, Y21 is a diameter of an inscribed circle of the base portion 6.

The reverse surface 42 and the connected surface 71 may be connected to each other directly or via a metal film, in any of the pressure sensors 1 described as examples by reference to FIG. 1 to FIG. 10. Examples of a metal that may be used for the metal film include titanium, silver, and gold.

A pressure sensor according to the present invention has an effect of enabling its resolution to be improved while enabling strength, abrasion resistance, and corrosion resistance of its diaphragm to be increased.

### Others

The following are some examples of a combination of technical features disclosed herein.
(1) A pressure sensor, comprising: a pressure receiver having: a diaphragm portion that is deformed by receiving pressure on a pressure receiving surface thereof; and a rim portion that is formed around and integrally with the diaphragm portion and formed to be thicker than the diaphragm portion; and a semiconductor substrate that is connected to a reverse surface of the pressure receiving surface and detects strain in the diaphragm portion, wherein the pressure receiver is formed of ceramic, the semiconductor substrate has: a base portion provided to face the reverse surface; and a connected portion that protrudes from the base portion toward the reverse surface and has a connected surface connected to the reverse surface, at least one resonating strain gauge has been provided on the semiconductor substrate, and the connected portion has an area smaller than an area of the base portion in a case where the pressure sensor is viewed from a direction perpendicular to the reverse surface.
(2) The pressure sensor according to (1), wherein the base portion and the connected portion are formed of silicon, and a difference between a thermal expansion coefficient of the base portion and the connected portion and a thermal expansion coefficient of the pressure receiver is 2 ppm/□C or less in a range from 0°C to 200°C.
(3) The pressure sensor according to (1) or (2), wherein the entire connected surface is in contact with the diaphragm portion.
(4) The pressure sensor according to (1) or (2), wherein part of the connected surface is in contact with the rim portion.
(5) The pressure sensor according to any one of (1) to (4), wherein the connected surface is connected to the reverse surface directly or via a metal film.
(6) The pressure sensor according to any one of (1) to (5), wherein the pressure receiver is recessed on one side of the pressure receiver, in a region where the diaphragm portion has been provided, the one side being where the pressure receiving surface is.
(7) The pressure sensor according to any one of (1) to (5), wherein the pressure receiver is recessed on one side of the pressure receiver, in a region where the diaphragm portion has been provided, the one side being where the reverse surface is.
(8) The pressure sensor according to any one of (1) to (7), wherein the base portion has a square shape in a case where the pressure sensor is viewed from the direction perpendicular to the reverse surface.
(9) The pressure sensor according to (8), wherein the base portion has a side length larger than an outer diameter of the diaphragm portion.
(10) The pressure sensor according to any one of (1) to (7), wherein the base portion has a circular shape in a case where the pressure sensor is viewed from the direction perpendicular to the reverse surface.
(11) The pressure sensor according to (10), wherein the base portion has an outer diameter larger than an outer diameter of the diaphragm portion.
(12) The pressure sensor according to any one of (1) to (11), wherein the connected surface has a circular shape in a case where the pressure sensor is viewed from the direction perpendicular to the reverse surface.
(13) The pressure sensor according to any one of (1) to (11), wherein the connected surface has a polygonal shape in a case where the pressure sensor is viewed from the direction perpendicular to the reverse surface.

## Claims

1. A pressure sensor (1), comprising:
a pressure receiver (2) having: a diaphragm portion (4) that is deformed by receiving pressure on a pressure receiving surface (41) thereof; and a rim portion (5) that is formed around and integrally with the diaphragm portion and formed to be thicker than the diaphragm portion; and
a semiconductor substrate (3) that is connected to a reverse surface (42) of the pressure receiving surface and detects strain in the diaphragm portion, wherein
the pressure receiver is formed of ceramic,
the semiconductor substrate has: a base portion (6) provided to face the reverse surface; and a connected portion (7) that protrudes from the base portion toward the reverse surface and has a connected surface (71) connected to the reverse surface,
at least one resonating strain gauge has been provided on the semiconductor substrate, and
the connected portion has an area smaller than an area of the base portion in a case where the pressure sensor is viewed from a direction perpendicular to the reverse surface.

2. The pressure sensor according to claim 1, wherein
the base portion and the connected portion are formed of silicon, and
a difference between a thermal expansion coefficient of the base portion and the connected portion and a thermal expansion coefficient of the pressure receiver is 2 ppm/°C or less in a range from 0°C to 200°C.

3. The pressure sensor according to claim 1, wherein the entire connected surface is in contact with the diaphragm portion.

4. The pressure sensor according to claim 1, wherein part of the connected surface is in contact with the rim portion.

5. The pressure sensor according to claim 1, wherein the connected surface is connected to the reverse surface directly or via a metal film.

6. The pressure sensor according to claim 1, wherein the pressure receiver is recessed on one side of the pressure receiver, in a region where the diaphragm portion has been provided, the one side being where the pressure receiving surface is.

7. The pressure sensor according to claim 1, wherein the pressure receiver is recessed on one side of the pressure receiver, in a region where the diaphragm portion has been provided, the one side being where the reverse surface is.

8. The pressure sensor according to claim 1, wherein the base portion has a square shape in a case where the pressure sensor is viewed from the direction perpendicular to the reverse surface.

9. The pressure sensor according to claim 8, wherein the base portion has a side length larger than an outer diameter of the diaphragm portion.

10. The pressure sensor according to claim 1, wherein the base portion has a circular shape in a case where the pressure sensor is viewed from the direction perpendicular to the reverse surface.

11. The pressure sensor according to claim 10, wherein the base portion has an outer diameter larger than an outer diameter of the diaphragm portion.

12. The pressure sensor according to claim 1, wherein the connected surface has a circular shape in a case where the pressure sensor is viewed from the direction perpendicular to the reverse surface.

13. The pressure sensor according to claim 1, wherein the connected surface has a polygonal shape in a case where the pressure sensor is viewed from the direction perpendicular to the reverse surface.
